# EUROPÄISCHE PATENTSCHRIFT

(11) **EP 2 349 837 B1**
(45) Veröffentlichungstag und Bekanntmachung des Hinweises auf die Patenterteilung: **10.10.2012**
(21) Anmeldenummer: 09743866.7
(22) Anmeldetag: 26.10.2009
(51) Int. Cl.: B64D 13/02

(54) **VEFAHREN UND SYSTEM ZUR NOTBELÜFTUNG EINER FLUGZEUGKABINE**
METHOD AND SYSTEM FOR EMERGENCY VENTILATION OF AN AIRCRAFT CABIN
PROCÉDÉ ET SYSTÈME D'AÉRATION D'URGENCE D'UNE CABINE D'AVION

(30) Priorität: 07.11.2008 DE 102008056417; 07.11.2008 US 112209 P
(43) Veröffentlichungstag der Anmeldung: 03.08.2011
(73) Patentinhaber: Airbus Operations GmbH, 21129 Hamburg (DE)
(72) Erfinder: HEUER, Thomas, 22559 Hamburg (DE)
(74) Vertreter: Schicker, Silvia
(86) Internationale Anmeldenummer: PCT/EP2009/007648
(87) Internationale Veröffentlichungsnummer: WO 2010/051920

(56) Entgegenhaltungen:
- EP-A1- 0 693 423
- WO-A1-2007/054206
- GB-A- 2 443 964
- US-A- 6 159 091

## Beschreibung

Die Erfindung betrifft ein Verfahren zur Notbelüftung einer Flugzeugkabine für den Fall, dass die Flugzeugkabine aufgrund eines Defekts in einer Flugzeugklimaanlage nicht mit der notwendigen Atemluft versorgt werden kann. Ferner betrifft die Erfindung ein System zur Notbelüftung einer Flugzeugkabine.

In einer Flugzeugkabine sorgt üblicherweise eine Flugzeugklimaanlage für einen notwendigen Luftaustausch und regelt den Kabinendruck sowie die Kabinentemperatur. Unter dem Begriff Flugzeugkabine sind hier alle im Normalbetrieb eines Flugzeugs zu belüftenden Bereiche des Flugzeugs, wie beispielsweise ein Cockpit, eine Passagierkabine, Crewbereiche und zu belüftende Frachträume zu verstehen. In größeren Passagierflugzeugen mit mehreren Triebwerken sind in der Regel zwei redundante, voneinander unabhängige, parallel laufende Klimaaggregate vorgesehen, um die Flugzeugkabine mit Atemluft zu versorgen. Diese Klimaaggregate bereiten Triebswerkszapfluft auf und speisen diese anschließend als Prozessluft in eine Mischkammer ein. In der Mischkammer wird die Prozessluft mit Rezirkulationsluft gemischt, die von entsprechenden Rezirkulationsventilatoren aus der Flugzeugkabine gesaugt wird. Die in der Mischkammer erzeugte Mischluft wird schließlich über ein Luftverteilungssystem in der Flugzeugkabine verteilt.

Der Kabineninnendruck wird mittels eines Kabinendruckregelsystems geregelt, das steuerbare im Rumpf des Flugzeugs angeordnete Luftauslassventile umfasst. Die Luftauslassventile des Kabinendruckregelsystems sind im Bereich einer Außenhaut des Flugzeugrumpfes vorgesehen. Zur Regelung des Kabineninnendrucks werden diese Luftauslassventile entsprechend dem in der Flugzeugkabine herrschenden Druck und des Flugzustandes gesteuert. Ein Stellwinkel, welchen diese Ventile mit der Außenhaut einschließen, liegt üblicherweise in einem Bereich zwischen 0° und 90°. Die Luftauslassventile sind jedoch auch derart ansteuerbar, dass ihr Stellwinkel größer als 90° ist. Am Boden sind die Luftauslassventile zum Kabineninnendruckabbau üblicherweise vollständig geöffnet, d.h. ihr Stellwinkel beträgt 90°. Während der Flugphase ist der Stellwinkel der Luftauslassventile in deren Normalbetrieb üblicherweise kleiner als 90°.

Sollte während des Fluges ein Defekt in der Flugzeugklimaanlage auftreten, wodurch die Flugzeugkabine nicht mehr mit ausreichend Atemluft versorgt werden kann, so sinkt das Flugzeug auf eine sichere Flughöhe und fliegt unbedruckt zum Zielflughafen bzw. zu einem nähergelegenen Flugfeld. Um für diesen Zeitraum die notwendige Atemluft für die Passagiere bereitzustellen, ist es bekannt Flugzeuge mit einem bzw. mehreren sogenannten Notstaulufteinlässen zu versehen. Bei Versagen der Flugzeugklimaanlage kann ein Notstaulufteinlass so gesteuert werden, dass Stauluft aus der Flugzeugumgebung direkt in das Luftverteilungssystem eingespeist wird. Um eine ausreichende Atemluftzufuhr zu gewährleisten, ist abhängig vom Volumen der Flugzeugkabine eine entsprechende Anzahl von Notstaulufteinlässen notwendig.

Ein Notstaulufteinlass ist ein elektrisch anzusteuerndes, mechanisches Bauteil und daher fehleranfällig. Aus Redundanzgründen muss daher ein elektrischer Antrieb des Notstaulufteinlasses zweifach vorhanden sein. Zur Steuerung des Notstaulufteinlasses muss ein Steuergerät vorgesehen sein, welches Sensoren bzw. Endlagenschalter umfasst, um eine Endlage des Notstaulufteinlasses zu erkennen. Bekannte Notstaulufteinlässe werden in der Regel manuell angesteuert. Folglich muss im Cockpit ein entsprechender Schalter vorhanden sein. Alle zusätzlich erforderlichen Geräte und Bauteile erhöhen das Gewicht des Flugzeugs und verringern somit seine Nutzlastkapazität. Zudem ist jeder elektrische Antrieb eines Notstaulufteinlasses mit Strom zu versorgen. Dies erhöht permanent die geforderte Generatorkapazität, obwohl die Notstaulufteinlässe nur sehr selten angesteuert werden.

Die US 6,159,091 A offenbart ein System und ein Verfahren zur Belüftung einer Flugzeugkabine, bei dem der Luftdruck innerhalb der Kabine auf einem erforderlichen Niveau gehalten wird, indem ein Luftstrom aus der Kabine durch im Flugzeugrumpf angeordnete Überbordauslassventile kontrolliert wird. Ferner ist für den Fall eines Fehlbetriebs des Belüftungssysstems zur Druckregelung in der Kabine ein Ersatzbelüftungsmodus möglich. Hierfür umfasst das Belüftungssystem eine Steuereinheit und ein Vorlaufersatzauslassventil. Das Vorlaufersatzauslassventil kann in einem ersten Modus betrieben werden, in dem ein Ventilelement derart gesteuert wird, dass Luft aus dem Flugzeug ausgelassen wird. Ferner kann das Ventil in einem zweiten Modus betrieben werden, in dem das Ventilelement derart gesteuert wird, dass Umgebungsluft in die Flugzeugkabine eingelassen wird. Bei einem Fehlbetrieb des Belüftungssystems steuert die Steuereinheit Gebläse und Ventile derart, dass ein Zufluss an Atmosphärenluft zur Kabine durch das Vorlaufersatzauslassventil möglich ist und diese Luft durch die Kabine zirkuliert wird, um schließlich über das Überbordauslassventil in die Atmosphäre zurückgeleitet zu werden.

Aus der GB 2 443 964 A ist ein Flugzeugkabinendruckregelsystem bekannt, welches ein erstes Auslassventil und ein zweites Auslassventil umfasst, die in einem ersten Bereich beziehungsweise in einem zweiten Bereich einer bedruckten Kabine angeordnet sind und den Auslass von Gas aus der bedruckten Kabine ermöglichen. Der erste und der zweite Bereich, können beispielsweise in einem Bugbereich beziehungsweise in einem vom Bugbereich beabstandeten Heckbereich des Flugzeugrumpfs angeordnet sein.

Die EP 0 693 423 A1 betrifft ein Verfahren zum Klimatisieren von zwei Passagierdecks eines Flugzeugs, bei dem von zwei Klimaaggregaten bereitgestellte Kaltluftströme in zwei Vormischkammern geleitet und dort mit Rezirkulationsluft gemischt werden. Die Mischluft aus den Vormischkammern wird mindestens einer lokalen Mischkammer zugeleitet, mit Rezirkulationsluft aus einer Oberdeckpassagierkabine vermischt und schließlich der Oberdeckpassagierkabine oder einer Hauptdeckpassagierkabine zugeführt. Ein Klimaabluftstrom aus der Hauptdeckpassagierkabine wird zum Teil als Rezirkulationsluft in die Vormischkammern geleitet und zum Teil an die Außenatmosphäre abgeführt.

Aus der WO 2007/054206 A1 ist ein Stauluftkanaleinlassventil bekannt, das ein Betätigungselement zum Öffnen und/oder Schließen des Ventils sowie eine Steuereinrichtung umfasst, durch die das Ventil in verschiedene Offenstellungen gebracht werden kann. Ein Öffnungswinkel des Ventils wird in Abhängigkeit einer Ist-Temperatur oder einer Soll-Temperatur in einer Flugzeugkabine eingestellt.

Die Erfindung ist auf die Aufgabe gerichtet, ein treibstoffsparendes, zuverlässiges Verfahren und System zur Notbelüftung einer Flugzeugkabine bereitzustellen.

Diese Aufgabe wird durch ein im Patentanspruch 1 definiertes Verfahren sowie ein im Patentanspruch 5 definiertes System zur Notbelüftung einer Flugzeugkabine gelöst.

Das erfindungsgemäße Verfahren umfasst das Steuern eines in einem ersten Flugzeugrumpfbereich angeordneten ersten Ventils, welches in seinem Normalbetrieb als Luftauslassventil eines Flugzeugkabinendruckregelsystems dient, derart, dass durch das geöffnete erste Ventil Luft aus der Flugzeugumgebung in den ersten Flugzeugrumpfbereich zugeführt und aus dem ersten Flugzeugrumpfbereich in die Flugzeugkabine geleitet wird. Gemäß einem weiteren Verfahrensschritt wird ein in einem von dem ersten Flugzeugrumpfbereich entlang einer Längsachse des Flugzeugs beabstandeten zweiten Flugzeugrumpfbereich angeordnetes zweites Ventil, welches in seinem Normalbetrieb als weiteres Luftauslassventil des Flugzeugkabinendruckregelsystems dient, derart gesteuert, dass Luft aus der Flugzeugkabine in den zweiten Flugzeugrumpfbereich geleitet und durch das geöffnete zweite Ventil in die Flugzeugumgebung abgeführt wird.

Durch die Verwendung des in dem ersten Flugzeugrumpfbereich vorgesehenen ersten Ventils als Staulufteinlass, welches einen lokalen Überdruck erzeugt und des in dem zweiten Flugzeugrumpfbereich vorgesehenen zweiten Ventils zur Entlüftung, welches einen lokalen Unterdruck erzeugt, erfolgt eine Notbelüftung der Passagierkabine. Diese Notbelüftung beruht auf der Erzeugung von lokalem Überdruck (Staudruck) am ersten Ventil und von lokalem Unterdruck am zweiten Ventil. Durch das geöffnete zweite Ventil wird Luft aus dem zweiten Flugzeugrumpfbereich in die Umgebung abgeführt. Somit wird in dem zweiten Flugzeugrumpfbereich ein Unterdruck erzeugt, der bewirkt, dass Luft aus der Flugzeugkabine in den zweiten Flugzeugrumpfbereich strömt. Durch das Ausströmen von Luft aus der Flugzeugkabine wird auch in der Flugzeugkabine ein Unterdruck erzeugt, der bewirkt, dass durch das geöffnete erste Ventil zugeführte Stauluft aus dem ersten Flugzeugrumpfbereich in die Flugzeugkabine strömt.

Durch die Steuerung der im Normalbetrieb als Luftauslassventile dienenden ersten und zweiten Ventile zur Notbelüftung der Flugzeugkabine kann auf die bisher zusätzlich in Flugzeugen vorgesehenen Notstaulufteinlässe mitsamt ihrer Verrohrung, der notwendigen Steuerung und des Cockpitschalters verzichtet werden. Die Luftauslassventile des Flugzeugkabinendruckregelsystems sind in dem Flugzeug ohnehin vorhanden, so dass zur Durchführung des erfindungsgemäßen Notbelüftungsverfahrens keine zusätzlichen Bauteile notwendig sind. Somit wird das Gewicht des Flugzeugs nicht zusätzlich erhöht. Da auch auf eine zusätzliche Steuerung verzichtet werden kann, wird Energie und folglich Treibstoff eingespart.

Der erste und der zweite Flugzeugrumpfbereich können in einem Unterflurbereich des Flugzeugs angeordnet und räumlich voneinander getrennt sein. Diese räumliche Trennung erfolgt beispielsweise über einen Flügelmittelkasten oder auch über eine einfache Trennwand. Durch die räumliche Trennung wird verhindert, dass dem ersten Flugzeugrumpfbereich zugeführte Luft direkt in den zweiten Flugzeugrumpfbereich strömt, ohne dabei den Unterflurbereich des Flugzeugs zu verlassen. Der erste Flugzeugrumpfbereich kann ferner in einem an eine Flugzeugnase angrenzenden vorderen Rumpfbereich des Flugzeugs und der zweite Flugzeugrumpfbereich in einem an ein Heck des Flugzeugs angrenzenden hinteren Rumpfbereich angeordnet sein. Die Flugzeugkabine kann in einem Oberflurbereich des Flugzeugs angeordnet sein.

Falls vorhanden, können auch mehrere im Normalbetrieb als Luftauslassventile dienende Ventile, die in dem ersten Flugzeugrumpfbereich vorgesehen sind, bei dem erfindungsgemäßen Notbelüftungsverfahren als Staulufteinlassventile eingesetzt werden. Ebenso können, soweit vorhanden, mehrere im Normalbetrieb als Luftauslassventile dienende Ventile, die in dem zweiten Flugzeugrumpfbereich angeordnet sind, bei dem erfindungsgemäßen Verfahren als Nothelüftungsluftauslassventile verwendet werden.

Die im Bereich der Außenhaut des Flugzeugs angeordneten Luftauslassventile des Kabinendruckregelsystems können als um eine Achse schwenkbare Ventilklappen ausgebildet sein, deren Schwenkachse nicht im Bereich einer der Flugzeugnase zugewandten Kante angeordnet ist. Zudem verlaufen die Schwenkachsen der Ventilklappen vorzugsweise nicht parallel zur Flugzeuglängsachse. In einer vorteilhaften Ausgestaltung verläuft die Schwenkachse der Ventilklappe senkrecht zur Flugzeuglängsachse, wobei die Schwenkachse einer Ventilklappenmittelachse entsprechen oder in einem anderen Bereich der Ventilöffnung angeordnet sein kann. Vorzugsweise ist die Schwenkachse jedoch so angeordnet, dass die geöffnete Ventilklappe im Flugbetrieb des Flugzeugs als Luftwiderstand dient. Dadurch wird die auf die geöffnete Ventilklappe treffende Luft gestaut. Der dabei entstehende Staudruck unterstützt die Strömung der Stauluft aus der Flugzeugumgebung durch das erste Ventil in den ersten Flugzeugrumpfbereich.

Um für eine Notbelüftung der Flugzeugkabine zu sorgen, kann das erste Ventil zur Zufuhr von Stauluft aus der Flugzeugumgebung in den ersten Flugzeugrumpfbereich vollständig geöffnet werden, und das zweite Ventil kann zumindest teilweise geöffnet werden. Im vollständig geöffneten Zustand des ersten Ventils ist die Stauluftzufuhr durch das erste Ventil in den ersten Flugzeugrumpfbereich möglich, während ein teilweise geöffnetes erstes Ventil bei entsprechender Konstruktion des Ventils unter Umständen lediglich die Luftabfuhr aus dem ersten Flugzeugrumpfbereich erlaubt. Gemäß einer vorteilhaften Ausgestaltung ist der Stellwinkel eines vollständig geöffneten und in Form einer Ventilklappe ausgebildeten ersten Ventils größer als 90°. Für die Zufuhr von Stauluft aus der Flugzeugumgebung durch das erste Ventil ist ein Stellwinkel, der größer als 90° ist, besonders günstig.

Die durch das erste Ventil in den ersten Flugzeugrumpfbereich zugeführte Stauluft kann aus dem ersten Flugzeugrumpfbereich einem Luftverteilungssystem der Flugzeugklimaanlage zugeführt werden. Es ist jedoch auch denkbar, dass die Luft aus dem ersten Flugzeugrumpfbereich direkt durch Durchtrittsöffnungen zwischen der Flugzeugkabine und dem ersten Flugzeugrumpfbereich in die Flugzeugkabine strömt. In dem ersten Flugzeugrumpfbereich sind ferner zumindest ein Rezirkulationsvetilator und eine Mischkammer der Flugzeugklimaanlage angeordnet. Der mindestens eine Rezirkutationsventilator wird derart gesteuert, dass er Luft aus dem ersten Flugzeugrumpfbereich ansaugt und der Mischkammer zuführt. Aus der Mischkammer kann die Luft über das Luftverteilungssystem in die Flugzeugkabine gefördert werden und diese somit mit der notwendigen Atemluft versorgen. Der Rezirkulationsventilator unterstützt somit die Förderung von Luft aus dem ersten Flugzeugrumpfbereich in die Flugzeugkabine. Im Falle eines Defekts des Rezirkulationsventilators wird eine ordnungsgemäße Notbelüftung jedoch bereits durch die bereits beschriebene unterdruckgetriebene Notbelüftung gewährleistet.

Aus der Flugzeugkabine kann die Luft über Durchtrittsöffnungen zwischen der Flugzeugkabine und dem zweiten Flugzeugrumpfbereich in den zweiten Flugzeugrumpfbereich strömen und von dort durch das zweite Ventil in die Flugzeugumgebung abgeführt werden. Ist der mindestens eine Rezirkulationsventilator in dem ersten Flugzeugrumpfbereich entlang der Flugzeuglängsachse weiter von der Flugzeugnase entfernt als das erste Ventil, kann auf eine räumliche Trennung zwischen dem ersten und zweiten Flugzeugrumpfbereich verzichtet werden, da der Betrieb des Rezirkulationsventilators eine erzwungene Strömung der Luft aus dem ersten Flugzeugrumpfbereich in die Flugzeugkabine erzeugt und folglich eine direkte Luftströmung vom ersten in den zweiten Flugzeugrumpfbereich ohne Durchtritt durch die zu belüftendende Kabine zumindest weiterstgehend unterbunden wird.

Bei einer bevorzugten Ausführungsform des erfindungsgemäßen Verfahrens kann eine elektronische Steuereinheit anhand von der elektronischen Steuereinheit zugeführten Signalen einen Fehlbetrieb eines Systems erkennen, welches im Normalbetrieb für eine Belüftung der Flugzeugkabine und/oder eine Regelung des Kabineninnendrucks sorgt. In Reaktion auf die Erkennung eines derartigen Fehlbetriebs kann die elektronische Steuereinheit den Betrieb des ersten und/oder des zweiten Ventils und/oder des Rezirkulationsventilators zur Durchführung des Verfahrens zur Notbelüftung der Flugzeugkabine steuern. Die elektronische Steuereinheit kann beispielsweise eine Steuereinheit sein, die im Normalbetrieb die Luftauslassventile des Kabinendruckregelsystems zur Regelung des Kabineninnendrucks steuert.

Die elektronische Steuereinheit kann den Betrieb des ersten und/oder zweiten Ventils und/oder des Rezirkulationsventilators in Reaktion auf die Erkennung eines Fehlbetriebs des Systems, welches im Normalbetrieb für eine Belüftung der Flugzeugkabine sorgt, automatisch zur Durchführung des Verfahrens zur Notbelüftung der Flugzeugkabine steuern. Das heißt, dass die Steuerung und der Betrieb der im Normalbetrieb als Luftauslassventile dienenden ersten und zweiten Ventile automatisch während des Sinkfluges von Druckhaltungspriorität auf Notbelüftung umschaltet, ohne dass ein Eingriff eines Piloten erforderlich ist. Durch das automatische Umschalten von Druckhaltungspriorität auf Notbelüftung muss folglich im Cockpit kein zusätzlicher Schalter vorgesehen sein. Somit besteht auch nicht die Gefahr, dass aufgrund von menschlichem Versagen zu spät bzw. überhaupt nicht auf den Notbelüftungsbetrieb umgeschaltet wird, da eine entsprechende Aktion des Piloten entfällt.

Die der elektronischen Steuereinheit zugeführten Signale, aufgrund derer die automatische Umschaltung von Druckhaltungspriorität auf Notbelüftung erfolgt, können von Sensoren und Geräten, die mit der Steuereinheit in Verbindung stehen, ausgegeben werden.

In einer vorteilhaften Ausgestaltung können die Sensoren auch der Überwachung der Funktion einzelner Klimaanlagenkomponenten dienen. Die Sensoren können beispielsweise die Lufterzeugungsaggregate und/oder Komponenten des Luftverteilungssystems überwachen, ohne die eine ausreichende Belüftung der Flugzeugkabine nicht möglich ist, und im Falle eines Defekts entsprechende Signale aussenden. Somit kann der Notbelüftungsbetrieb frühzeitig schon während des Sinkfluges eingeleitet werden.

Des weiteren betrifft die vorliegende Erfindung ein System zur Notbelüftung einer Flugzeugkabine. Dieses System umfasst ein in einem ersten Flugzeugrumpfbereich angeordnetes erstes Ventil sowie ein in einem zweiten Flugzeugrumpfbereich angeordnetes zweites Ventil. Das erste und das zweite Ventil dienen in ihrem Normalbetrieb als Luftauslassventile eines Flugzeugkabinendruckregelsystems. Der erste und der zweite Flugzeugrumpfbereich sind entlang einer Längsachse des Flugzeugs voneinander beabstandet. Zudem umfasst das System eine elektronische Steuereinheit, welche dazu eingerichtet ist, das erste und das zweite Ventil entsprechend dem Notbelüftungsbetrieb zu steuern. Die Steuerung der Ventile erfolgt derart, dass durch das geöffnete erste Ventil Luft aus der Flugzeugumgebung in den ersten Flugzeugrumpfbereich zugeführt und aus dem ersten Flugzeugrumpfbereich in die Flugzeugkabine geleitet wird. Die Luft aus der Flugzeugkabine kann weiter in den zweiten Flugzeugrumpfbereich geleitet werden und durch das geöffnete zweite Ventil in die Flugzeugumgebung abgeführt werden. Dadurch erfolgt die bereits beschriebene unterdruckgetriebene Notbelüftung der Flugzeugkabine.

Das erfindungsgemäße Notbelüftungsverfahren basiert auf der Steuerung von Bestandteilen des Kabinendruckregelsystems, welche ohnehin in einem Flugzeug vorhanden sind. In ähnlicher Weise umfasst das erfindungsgemäße Notbelüftungssystem Bauteile des Kabinendruckregelsystems. Das erfindungsgemäße System sorgt folglich, ohne zusätzliche Bauteile zu benötigen, für eine Notbelüftung der Flugzeugkabine. Die Bauteile des Kabinendruckregelsystems haben aufgrund ihrer Sicherheitsrelevanz eine hohe Zuverlässigkeit, so dass sich auch das erfindungsgemäße Notbelüftungssystem durch eine hohe Systemzuverlässigkeit auszeichnet. Da auf Bauteile des Kabinendruckregelsystems zurückgegriffen wird, wird das Gewicht des Flugzeugs nicht zusätzlich erhöht. Ebenso wird keine zusätzliche elektrische Energie benötigt. Zudem entfällt der Einbauaufwand für Notstaulufteinlässe, deren Verrohrung und Ansteuerung vollständig.

Die elektronische Steuereinheit kann dazu eingerichtet sein, das erste Ventil so zu steuern, dass es vollständig geöffnet wird. Ferner kann sie dazu eingerichtet sein, das zweite Ventil so zu steuern, dass es zumindest teilweise geöffnet wird.

Ferner ist die elektronische Steuereinheit des erfindungsgemäßen Notbelüftungssystems dazu eingerichtet, mindestens einen Rezirkulationsventilator einer Flugzeugklimaanlage, der in seinem Normalbetrieb Luft aus der Flugzeugkabine ansaugt und einer Mischkammer einer Flugzeugklimaanlage zuführt, derart zu steuern, dass der Rezirkulationsventilator durch das geöffnete Ventil aus der Flugzeugumgebung in den ersten Flugzeugrumpfbereich zugeführte Luft in die Mischkammer der Flugzeugklimaanlage saugt und aus der Mischkammer in die Flugzeugkabine fördert.

Bei einer weiteren Ausgestaltung des erfindungsgemäßen Notbelüftungssystems kann die elektronische Steuereinheit dazu eingerichtet sein, anhand von der elektronischen Steuereinheit zugeführten Signalen einen Fehlbetrieb eines Systems zur Belüftung der Flugzeugkabine zu erkennen und in Reaktion auf die Erkennung eines derartigen Fehlbetriebs und des Flugzustandes den Betrieb des ersten/oder des zweiten Ventils und/oder des Rezirkulationsventilators zur Durchführung des Verfahren zur Notbelüftung der Flugzeugkabine zu steuern.

Schließlich kann die elektronische Steuereinheit des Notbelüftungssystems dazu eingerichtet sein, den Betrieb des ersten und/oder des zweiten Ventils und/oder des Rezirkulationsventilators in Reaktion auf die Erkennung eines Fehlbetriebs eines Systems zur Belüftung der Flugzeugkabine automatisch zur Durchführung des Verfahrens zur Belüftung der Flugzeugkabine zu steuern.

Das erfindungsgemäße Verfahren und System zur Notbelüftung einer Flugzeugkabine wird im Folgenden unter Bezugnahme auf die beigefügte schematische Figur detailliert erläutert, die ein Flugzeug mit in einem Notbelüftungsbetrieb gesteuerten Luftauslassventilen eines Flugzeugkabinendruckregelsystems zeigt.

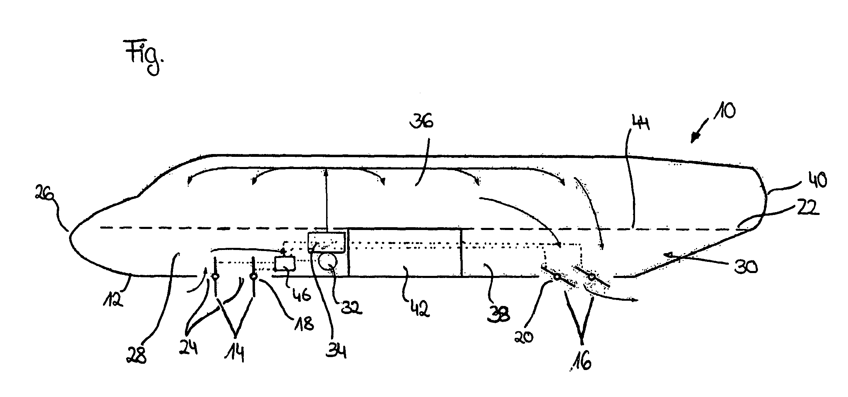

Ein in der Figur veranschaulichtes Flugzeug 10 umfasst im Bereich seiner Außenhaut 12 angeordnete erste Ventile 14 sowie ebenfalls im Bereich der Flugzeugaußenhaut 12 angeordnete zweite Ventile 16. Die Ventile 14, 16 dienen in ihrem Normalbetrieb als Luftauslassventile eines Kabinendruckregelsystems des Flugzeugs 10. Die ersten sowie die zweiten Ventile 14, 16 sind als Ventilklappen ausgeformt. Die Schwenkachsen 18, 20 der ersten und zweiten Ventile 14, 16 entsprechen den Ventilklappenmittelachsen und verlaufen senkrecht zu einer Flugzeuglängsachse 22.

Die ersten Ventile 14 sind in einem ersten Flugzeugrumpfbereich 28 umfasst. Der erste Flugzeugrumpfbereich 28 ist in einem Unterflurbereich 30 des Flugzeugs 10 angeordnet. In dem ersten Flugzeugrumpfbereich 28 sind ein Rezirkulationsventilator 32 sowie eine Mischkammer 34 einer Flugzeugklimaanlage angeordnet. Der Unterflurbereich 30 des Flugzeugs 10 umfasst außerdem einen zweiten Flugzeugrumpfbereich 38. Dieser ist relativ zur Längsachse 22 von dem ersten Flugzeugrumpfbereich 28 beabstandet. Der zweite Flugzeugrumpfbereich 38 befindet sich in einem an ein Heck 40 des Flugzeugs 10 angrenzenden Abschnitts des Unterflurbereichs 30, während sich der erste Flugzeugrumpfbereich 28 in einem an die Flugzeugnase 26 angrenzenden Abschnitt des Unterflurbereichs 30 befindet. Gemäß dem in der Figur dargestellten Ausführungsbeispiel sind der erste und der zweite Flugzeugrumpfbereich 28, 38 durch einen Flügelmittelkasten 42 räumlich voneinander getrennt. Die zweiten Ventile 16 sind in einem Bereich der den zweiten Flugzeugrumpfbereich 38 umgebenden Außenhaut 12 angeordnet.

In dem in der Figur dargestellten Notbelüftungsbetrieb des Flugzeugs 10 beträgt ein Stellwinkel der ersten Ventile 14 relativ zur Flugzeugaußenhaut 12 90°. Im Flugbetrieb des Flugzeugs bilden in die Flugzeugumgebung abstehende Ventilklappenabschnitte der geöffneten ersten Ventile 14 einen Widerstand für die Flugzeugumgebungsluft. An den abstehenden Ventilklappenabschnitten der ersten Ventile 14 sammelt sich somit Stauluft und es entsteht ein lokaler Überdruck. Diese tritt durch Eintrittsöffnungen 24, die die geöffneten ersten Ventile 14 in ihrer 90°-Offenstellung relativ zur Längsachse 22 des Flugzeugs 10 in Richtung einer Flugzeugnase 26 freigeben, in einen ersten Flugzeugrumpfbereich 28 ein.

Im Notbelüftungsbetrieb wird der Rezirkulationsventilator 32 derart gesteuert, dass die durch die geöffneten ersten Ventile 14 dem ersten Flugzeugrumpfbereich 28 zugeführte Stauluft angesaugt und der Mischkammer 34 zugeführt wird. Die Luft aus der Mischkammer 34 wird anschließend über ein Luftverteilungssystem in einer Flugzeugkabine 36 verteilt.

Die in der Flugzeugkabine 36 verteilte Luft strömt über Durchtrittsöffnungen 44, welche zwischen der Flugzeugkabine und dem Unterflurbereich 30 vorgesehen sind, in den zweiten Flugzeugrumpfbereich 38. Dies geschieht aufgrund eines in dem zweiten Flugzeugrumpfbereich 38 herrschenden Unterdrucks. Dieser Unterdruck entsteht dadurch, dass die zweiten Ventile 16 im Notbelüftungsbetrieb zumindest teilweise geöffnet sind und einen spitzen Stellwinkel mit der Flugzeugaußenhaut 12 einschließen, so dass ein lokaler Unterdruck entsteht und durch die geöffneten zweiten Ventile 16 Luft aus dem zweiten Flugzeugrumpfbereich 38 in die Flugzeugumgebung austritt. Somit erfolgt eine Notlüftung der Flugzeugkabine 36 durch die ersten und zweiten Ventile 14, 16, welche im Normalbetrieb als Luftauslassventile des Kabinendruckregelsystems des Flugzeugs 10 dienen.

Die ersten und zweiten Ventile 14, 16 und der Rezirkulationsventilator 32 werden von einer elektronischen Steuereinheit 46 gesteuert. Die elektronische Steuereinheit 46 empfängt von in der Figur nicht gezeigten Sensoren und Geräten Signale, die einen Fehlbetrieb des Systems anzeigen, das im Normalbetrieb des Flugzeugs für eine Belüftung der Flugzeugkabine 36 sorgt. In Reaktion auf die Erkennung eines derartigen Fehlbetriebs und des Flugzustandes steuert die elektronische Steuereinheit 46 den Betrieb der ersten und zweiten Ventile 14, 16 und des Rezirkulationsventilators 32 derart, dass, wie in der Figur gezeigt, eine Notbelüftung der Flugzeugkabine 36 erfolgt. Die Steuerung des Notbelüftungsbetriebs durch die elektronische Steuereinheit 46 erfolgt automatisch, d.h. ohne dass ein entsprechender Eingriff oder Befehl des Piloten erforderlich ist.

## Patentansprüche

1. Verfahren zur Notbelüftung einer Flugzeugkabine (36), mit den Schritten:
- Steuern mindestens eines in einem ersten Flugzeugrumpfbereich (28) angeordneten ersten Ventils (14), das in seinem Normalbetrieb als Luftauslassventil eines Flugzeugkabinendruckregelsystems dient, derart, dass durch das geöffnete erste Ventil (14) Luft aus der Flugzeugumgebung in den ersten Flugzeugrumpfbereich (28) zugeführt und aus dem ersten Flugzeugrumpfbereich (28) in die Flugzeugkabine (36) geleitet wird;
- Steuern mindestens eines in einem von dem ersten Flugzeugrumpfbereich (28) entlang einer Längsachse (22) des Flugzeugs (10) beabstandeten zweiten Flugzeugrumpfbereich (38) angeordneten zweiten Ventils (16), das in seinem Normalbetrieb als weiteres Luftauslassventil des Flugzeugkabinendruckregelsystems dient, derart, dass Luft aus der Flugzeugkabine (36) in den zweiten Flugzeugrumpfbereich (38) geleitet und durch das geöffnete zweite Ventil (16) in die Flugzeugumgebung abgeführt wird,
wobei mindestens ein Rezirkulationsventilator (32) einer Flugzeugklimaanlage, welcher in seinem Normalbetrieb Luft aus der Flugzeugkabine (36) ansaugt und einer Mischkammer (34) einer Flugzeugklimaanlage zuführt, derart gesteuert wird, dass der Rezirkulationsventilator (32) durch das geöffnete erste Ventil (14) aus der Flugzeugumgebung in den ersten Flugzeugrumpfbereich (28) zugeführte Luft in die Mischkammer (34) der Flugzeugklimaanlage saugt und aus der Mischkammer (34) in die Flugzeugkabine (36) fördert.

2. Verfahren nach Anspruch 1,
**dadurch gekennzeichnet, dass** das erste Ventil (14) vollständig geöffnet wird, so dass Stauluft aus der Flugzeugumgebung durch das vollständig geöffnete erste Ventil (14) in den ersten Flugzeugrumpfbereich (28) zuführbar ist, und dass das zweite Ventil (16) zumindest teilweise geöffnet wird.

3. Verfahren nach Anspruch 1 oder 2,
**dadurch gekennzeichnet, dass** eine elektronische Steuereinheit (44) anhand von der elektronischen Steuereinheit zugeführten Signalen einen Fehlbetrieb eines Systems erkennt, das im Normalbetrieb für eine Belüftung der Flugzeugkabine (36) sorgt, und in Reaktion auf die Erkennung eines derartigen Fehlbetriebs den Betrieb des ersten und/oder des zweiten Ventils (14, 16) und/oder des Rezirkulationsventilators (32) zur Durchführung des Verfahrens zur Notbelüftung der Flugzeugkabine (36) steuert.

4. Verfahren nach Anspruch 3,
**dadurch gekennzeichnet, dass** die elektronische Steuereinheit (44) den Betrieb des ersten und/oder des zweiten Ventils (14, 16) und/oder des Rezirkulationsventilators (32) in Reaktion auf die Erkennung eines Fehlbetriebs des Systems, das im Normalbetrieb für eine Belüftung der Flugzeugkabine (36) sorgt, automatisch zur Durchführung des Verfahrens zur Notbelüftung der Flugzeugkabine (36) steuert.

5. System zur Notbelüftung einer Flugzeugkabine (36), mit:
- einem in einem ersten Flugzeugrumpfbereich (28) angeordneten ersten Ventil (14), das in seinem Normalbetrieb als Luftauslassventil eines Flugzeugkabinendruckregelsystems dient;
- einem in einem zweiten Flugzeugrumpfbereich (38) angeordneten zweiten Ventil (16), das in seinem Normalbetrieb als weiteres Luftauslassventil des Flugzeugkabinendruckregelsystems dient, wobei der erste und der zweite Flugzeugrumpfbereich (28, 38) entlang einer Längsachse (22) des Flugzeugs (10) voneinander beabstandet sind; und
- einer elektronischer Steuereinheit (44), die dazu eingerichtet ist, das erste und das zweite Ventil (14, 16) derart zu steuern, dass durch das geöffnete erste Ventil (14) Luft aus der Flugzeugumgebung in den ersten Flugzeugrumpfbereich (28) zugeführt und aus dem ersten Flugzeugrumpfbereich (28) in die Flugzeugkabine (36) geleitet wird, und dass Luft aus der Flugzeugkabine (36) in den zweiten Flugzeugrumpfbereich (38) geleitet und durch das geöffnete zweite Ventil (16) in die Flugzeugumgebung abgeführt wird,
wobei die elektronische Steuereinheit (44) ferner dazu eingerichtet ist, mindestens einen Rezirkulationsventilator (32) einer Flugzeugklimaanlage, der in seinem Normalbetrieb Luft aus der Flugzeugkabine (36) ansaugt und einer Mischkammer (34) einer Flugzeugklimaanlage zuführt, derart zu steuern, dass der Rezirkulationsventilator (32) durch das geöffnete erste Ventil (14) aus der Flugzeugumgebung in den ersten Flugzeugrumpfbereich (28) zugeführte Luft in die Mischkammer (34) der Flugzeugklimaanlage saugt und aus der Mischkammer (34) in die Flugzeugkabine (36) fördert.

6. System nach Anspruch 5,
**dadurch gekennzeichnet, dass** die elektronische Steuereinheit (44) dazu eingerichtet ist, das erste Ventil (14) so zu steuern, dass es vollständig geöffnet wird, so dass Stauluft aus der Flugzeugumgebung durch das vollständig geöffnete erste Ventil (14) dem ersten Flugzeugrumpfbereich (28) zuführbar ist, und dass die elektronische Steuereinheit ferner dazu eingerichtet ist, das zweite Ventil (16) so zu steuern, dass es zumindest teilweise geöffnet wird.

7. System nach Anspruch 5 oder 6,
**dadurch gekennzeichnet, dass** die elektronische Steuereinheit (44) dazu eingerichtet ist, anhand von der elektronischen Steuereinheit zugeführten Signalen einen Fehlbetrieb eines Systems zur Belüftung der Flugzeugkabine (36) zu erkennen und in Reaktion auf die Erkennung eines derartigen Fehlbetriebs den Betrieb des ersten und/oder des zweiten Ventils (14, 16) und/oder des Rezirkulationsventilators (32) zur Durchführung des Verfahrens zur Notbelüftung der Flugzeugkabine (36) zu steuern.

8. System nach Anspruch 7,
**dadurch gekennzeichnet, dass** die elektronische Steuereinheit (44) dazu eingerichtet ist, den Betrieb des ersten und/oder des zweiten Ventils (14, 16) und/oder des Rezirkulationsventilators (32) in Reaktion auf die Erkennung eines Fehlbetriebs eines Systems zur Belüftung der Flugzeugkabine (36) automatisch zur Durchführung des Verfahrens zur Notbelüftung der Flugzeugkabine (36) zu steuern.

## Claims

1. Method for emergency ventilation of an aircraft cabin (36), having the steps:
- controlling at least one first valve (14), arranged in a first aircraft fuselage area (28) and in its normal operation serving as an air outlet valve of an aircraft cabin pressure control system, such that air is supplied from the aircraft environment into the first aircraft fuselage area (28) through the opened first valve (14) and is conducted from the first aircraft fuselage area (28) into the aircraft cabin (36);
- controlling at least one second valve (16), arranged in a second aircraft fuselage area (38) spaced apart from the first aircraft fuselage area (28) along a longitudinal axis (22) of the aircraft (10) and in its normal operation serving as an additional air outlet valve of the aircraft cabin pressure control system, such that air is conducted from the aircraft cabin (36) into the second aircraft fuselage area (38) and is discharged into the aircraft environment through the opened second valve (16),
wherein at least one recirculation fan (32) of an aircraft air-conditioning system, which fan in its normal operation draws in air from the aircraft cabin (36) and supplies it to a mixing chamber (34) of an aircraft air-conditioning system, is controlled such that the recirculation fan (32) draws air, supplied from the aircraft environment into the first aircraft fuselage area (28) through the opened first valve (14), into the mixing chamber (34) of the aircraft air-conditioning system and conveys it from the mixing chamber (34) into the aircraft cabin (36).

2. Method according to Claim 1,
**characterised in that** the first valve (14) is fully opened, so that ram air is supplyable from the aircraft environment into the first aircraft fuselage area (28) through the fully opened first valve (14), and **in that** the second valve (16) is at least partly opened.

3. Method according to Claim 1 or 2,
**characterised in that** an electronic control unit (44) detects, on the basis of signals supplied to the electronic control unit, a malfunction of a system which during normal operation ensures ventilation of the aircraft cabin (36), and in response to the detection of such a malfunction controls the operation of the first and/or the second valve (14, 16) and/or the recirculation fan (32), for carrying out the method for emergency ventilation of the aircraft cabin (36).

4. Method according to Claim 3,
**characterised in that** the electronic control unit (44) automatically controls the operation of the first and/or the second valve (14, 16) and/or the recirculation fan (32) in response to the detection of a malfunction of the system which during normal operation ensures ventilation of the aircraft cabin (36), for carrying out the method for emergency ventilation of the aircraft cabin (36).

5. System for emergency ventilation of an aircraft cabin (36), having:
- a first valve (14), arranged in a first aircraft fuselage area (28) and in its normal operation serving as an air outlet valve of an aircraft cabin pressure control system;
- a second valve (16), arranged in a second aircraft fuselage area (38) and in its normal operation serving as an additional air outlet valve of the aircraft cabin pressure control system, the first and the second aircraft fuselage area (28, 38) being spaced apart from one another along a longitudinal axis (22) of the aircraft (10); and
- an electronic control unit (44) which is adapted to control the first and the second valve (14, 16) such that air is supplied from the aircraft environment into the first aircraft fuselage area (28) through the opened first valve (14) and is conducted from the first aircraft fuselage area (28) into the aircraft cabin (36), and that air is conducted from the aircraft cabin (36) into the second aircraft fuselage area (38) and is discharged into the aircraft environment through the opened second valve (16),
wherein the electronic control unit (44) is further adapted to control at least one recirculation fan (32) of an aircraft air-conditioning system, which fan in its normal operation draws in air from the aircraft cabin (36) and supplies it to a mixing chamber (34) of an aircraft air-conditioning system, such that the recirculation fan (32) draws air, supplied from the aircraft environment into the first aircraft fuselage area (28) through the opened first valve (14), into the mixing chamber (34) of the aircraft air-conditioning system and conveys it from the mixing chamber (34) into the aircraft cabin (36).

6. System according to Claim 5,
**characterised in that** the electronic control unit (44) is adapted to control the first valve (14) such that it is fully opened, so that ram air is supplyable from the aircraft environment to the first aircraft fuselage area (28) through the fully opened first valve (14), and **in that** the electronic control unit is further adapted to control the second valve (16) such that it is at least partly opened.

7. System according to Claim 5 or 6,
**characterised in that** the electronic control unit (44) is adapted to detect, on the basis of signals supplied to the electronic control unit, a malfunction of a system for ventilation of the aircraft cabin (36), and in response to the detection of such a malfunction to control the operation of the first and/or the second valve (14, 16) and/or the recirculation fan (32), for carrying out the method for emergency ventilation of the aircraft cabin (36).

8. System according to Claim 7,
**characterised in that** the electronic control unit (44) is adapted to automatically control the operation of the first and/or the second valve (14, 16) and/or the recirculation fan (32) in response to the detection of a malfunction of a system for ventilation of the aircraft cabin (36), for carrying out the method for emergency ventilation of the aircraft cabin (36).

## Revendications

1. Procédé d'aération d'urgence d'une cabine d'avion (36), comprenant les étapes suivantes :
- commande d'au moins une première soupape (14) disposée dans une première partie de fuselage d'avion (28) et servant, en fonctionnement normal, de soupape d'évacuation d'air d'un système de régulation de pression de cabine d'avion, de telle façon que de l'air provenant de l'extérieur de l'avion est amené par la première soupape ouverte (14) dans la première partie de fuselage d'avion (28) et conduit à partir de là dans la cabine d'avion (36) ;
- commande d'au moins une deuxième soupape (16) disposée dans une deuxième partie de fuselage d'avion (38) espacée de la première partie de fuselage d'avion (28) le long d'un axe longitudinal (22) de l'avion (10) et servant, en fonctionnement normal, de soupape supplémentaire d'évacuation d'air d'un système de régulation de pression de cabine d'avion, de telle façon que de l'air provenant de la cabine d'avion (36) est conduit dans la deuxième partie de fuselage d'avion (38) et évacué par la deuxième soupape ouverte (16) vers l'extérieur de l'avion,
au moins un ventilateur de recirculation (32) d'un système de conditionnement d'air d'avion, lequel, en fonctionnement normal, aspire de l'air provenant de la cabine d'avion (36) et l'amène à une chambre de mélange (34) d'un système de conditionnement d'air d'avion, étant commandé de telle manière que ledit ventilateur de recirculation (32) aspire par la première soupape ouverte (14) de l'air amené dans la première partie de fuselage d'avion (28) depuis l'extérieur de l'avion pour l'introduire dans la chambre de mélange (34) du système de conditionnement d'air et l'achemine depuis la chambre de mélange (34) dans la cabine d'avion (36).

2. Procédé selon la revendication 1,
**caractérisé en ce que** la première soupape (14) est complètement ouverte si bien que de l'air de refoulement provenant de l'extérieur de l'avion peut être amené par la première soupape (14) complètement ouverte dans la première partie de fuselage d'avion (28), et que la deuxième soupape (16) est au moins partiellement ouverte.

3. Procédé selon la revendication 1 ou 2,
**caractérisé en ce qu'**une unité de commande électronique (44) reconnaît, à partir de signaux qu'elle reçoit, un disfonctionnement de la part d'un système, lequel, en fonctionnement normal, assure l'aération de la cabine d'avion (36), et commande, en réaction à la reconnaissance d'un tel disfonctionnement, le fonctionnement de la première et/ou de la deuxième soupape (14, 16) et/ou du ventilateur de recirculation (32) pour que s'opère le procédé d'aération d'urgence de la cabine d'avion (36).

4. Procédé selon la revendication 3,
**caractérisé en ce que** l'unité de commande électronique (44) commande automatiquement le fonctionnement de la première et/ou de la deuxième soupape (14, 16) et/ou du ventilateur de recirculation (32) en réaction à la reconnaissance d'un disfonctionnement de la part du système, lequel, en fonctionnement normal, assure l'aération de la cabine d'avion (36), pour que s'opère le procédé d'aération d'urgence de la cabine d'avion (36).

5. Système d'aération d'urgence d'une cabine d'avion (36), comprenant :
- une première soupape (14) disposée dans une première partie de fuselage d'avion (28) et servant, en fonctionnement normal, de soupape d'évacuation d'air d'un système de régulation de pression de cabine d'avion,
- une deuxième soupape (16) disposée dans une deuxième partie de fuselage d'avion (38) et servant, en fonctionnement normal, de soupape supplémentaire d'évacuation d'air d'un système de régulation de pression de cabine d'avion, la première et la deuxième partie de fuselage d'avion (28, 38) étant espacées l'une de l'autre le long d'un axe longitudinal (22) de l'avion (10), et
- une unité de commande électronique (44) conçue pour commander la première et la deuxième soupape (14, 16) de telle façon que de l'air provenant de l'extérieur de l'avion est amené par la première soupape ouverte (14) dans la première partie de fuselage d'avion (28) et conduit à partir de là dans la cabine d'avion (36), et que de l'air provenant de la cabine d'avion (36) est conduit dans la deuxième partie de fuselage d'avion (38) et évacué par la deuxième soupape ouverte (16) vers l'extérieur de l'avion,
l'unité de commande électronique (44) étant en outre conçue pour commander au moins un ventilateur de recirculation (32) d'un système de conditionnement d'air d'avion, lequel ventilateur, en fonctionnement normal, aspire de l'air provenant de la cabine d'avion (36) et l'amène à une chambre de mélange (34) d'un système de conditionnement d'air d'avion, de telle façon que le ventilateur de recirculation (32) aspire de l'air amené par la première soupape ouverte (14) dans la première partie de fuselage d'avion (28) depuis l'extérieur de l'avion pour l'introduire dans la chambre de mélange (34) du système de conditionnement d'air et l'achemine depuis la chambre de mélange (34) dans la cabine d'avion (36).

6. Système selon la revendication 5,
**caractérisé en ce que** l'unité de commande électronique (44) est conçue pour commander de telle manière la première soupape (14) qu'elle est complètement ouverte, si bien que de l'air de refoulement provenant de l'extérieur de l'avion peut être amené par la première soupape (14) complètement ouverte à la première partie de fuselage d'avion (28), et que l'unité de commande électronique (44) est en outre conçue pour commander de telle manière la deuxième soupape (16) qu'elle est au moins partiellement ouverte.

7. Système selon la revendication 5 ou 6,
**caractérisé en ce que** l'unité de commande électronique (44) est en outre conçue pour reconnaître, à partir de signaux qu'elle reçoit, un disfonctionnement de la part d'un système d'aération de la cabine d'avion (36) et pour commander, en réaction à la reconnaissance d'un tel disfonctionnement, le fonctionnement de la première et/ou de la deuxième soupape (14, 16) et/ou du ventilateur de recirculation (32) pour que s'opère le procédé d'aération d'urgence de la cabine d'avion (36).

8. Système selon la revendication 7,
**caractérisé en ce que** l'unité de commande électronique (44) est en outre conçue pour commander automatiquement, en réaction à la reconnaissance d'un disfonctionnement de la part d'un système d'aération de la cabine d'avion (36), le fonctionnement de la première et/ou de la deuxième soupape (14, 16) et/ou du ventilateur de recirculation (32) pour que s'opère le procédé d'aération d'urgence de la cabine d'avion (36).
